# EUROPEAN PATENT APPLICATION

(11) **EP 4 794 420 A1**
(43) Date of publication of application: **19.08.2026**
(21) Application number: 24884374.0
(22) Date of filing: 08.10.2024
(51) Int. Cl.: H04W 72/12, H04W 28/02, H04W 72/04

(54) **DATA TRANSMISSION METHOD AND APPARATUS, AND STORAGE MEDIUM**

(30) Priority: 31.10.2023 CN 202311439006
(71) Applicant: HUAWEI TECHNOLOGIES CO., LTD., Shenzhen 518129 (CN)
(72) Inventor: CHEN, Yuqiao, Shenzhen, Guangdong 518129 (CN); ZENG, Zhengyang, Shenzhen, Guangdong 518129 (CN)
(74) Representative: MERH-IP Matias Erny Reichl Hoffmann Patentanwälte PartG mbB
(86) International application number: PCT/CN2024/123478
(87) International publication number: WO 2025/092370

(57) **Abstract**

This application relates to the field of communication technologies, and provides a data transmission method, an apparatus, and a storage medium, to improve air interface resource utilization while ensuring accurate and efficient transmission of data. The method includes: A terminal device sends a first message to an access network device, where the first message is for requesting the access network device to allocate, to the terminal device, a transmission resource for transmitting a to-be-transmitted packet, and the first message includes feature information of the to-be-transmitted packet; the terminal device receives a second message sent by the access network device, where the second message is for configuring the transmission resource; and the terminal device sends the to-be-transmitted packet to the access network device based on the transmission resource.

## Description

This application claims priority to Chinese Patent Application No. 202311439006.4, filed with the China National Intellectual Property Administration on October 31, 2023 and entitled "DATA TRANSMISSION METHOD, APPARATUS, AND STORAGE MEDIUM", which is incorporated herein by reference in its entirety.

### TECHNICAL FIELD

This application relates to the field of communication technologies, and in particular, to a data transmission method, an apparatus, and a storage medium.

### BACKGROUND

In a conventional technology, when industrial communication is performed by using a wireless technology, there are many typical industrial communication protocols, such as Profinet. The industrial communication protocols are usually designed to transmit logic control information of an upper-layer application by using a periodic packet with a period at a level of milliseconds or dozens of milliseconds. However, actually, a change period of the logic control information of the upper-layer application is far greater than a sending period of the periodic packet on an industrial communication layer. As a result, there are a large quantity of repeated packets during transmission on the industrial communication layer.

Currently, for a valid control instruction and repeated packets in periodic packets, an existing industrial communication protocol usually uses a non-differentiated reliability assurance level for processing. However, this causes excessive assurance on the repeated packets in a transmission process, thereby wasting air interface transmission resources, reducing air interface resource utilization, and increasing networking costs.

### SUMMARY

This application provides a data transmission method, an apparatus, and a storage medium, to improve air interface resource utilization while ensuring accurate and efficient transmission of data.

To achieve the foregoing objective, embodiments of this application use the following technical solutions.

According to a first aspect, a data transmission method is provided, applied to a terminal device. The method includes: The terminal device sends a first message to an access network device, where the first message is for requesting the access network device to allocate, to the terminal device, a transmission resource for transmitting a to-be-transmitted packet, and the first message includes feature information of the to-be-transmitted packet; the terminal device receives a second message sent by the access network device, where the second message is for configuring the transmission resource; and the terminal device sends the to-be-transmitted packet to the access network device based on the transmission resource.

According to the method in the first aspect, when the terminal device needs to send the to-be-transmitted packet to the access network device, the terminal device may send the first message to the access network device, where the first message is for requesting the access network device to allocate, to the terminal device, the transmission resource for transmitting the to-be-transmitted packet, and the first message includes the feature information of the to-be-transmitted packet. In this way, the access network device may better learn of a requirement and a feature of the to-be-transmitted packet based on the first message, and accurately configure the transmission resource for the terminal device, to meet a requirement of the terminal device, thereby improving air interface resource utilization while ensuring accurate and efficient transmission of the to-be-transmitted packet.

In a possible design, the feature information of the to-be-transmitted packet includes at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

Based on the possible design, the terminal device configures and sends the feature information of the to-be-transmitted packet to the access network device, so that the access network device can better learn of the requirement and the feature of the to-be-transmitted packet, and accurately allocate a time-frequency resource to the to-be-transmitted packet. The size of the to-be-transmitted packet may help the access network device properly arrange a resource for the to-be-transmitted packet, to ensure accurate transmission of the to-be-transmitted packet. The change of the to-be-transmitted packet helps the access network device dynamically schedule and manage the resource based on the change of the to-be-transmitted packet. The statistical rule of the time at which the to-be-transmitted packet arrives at the terminal device helps the access network device analyze a rule of arrival of the to-be-transmitted packet, allocate a proper resource in advance, and properly arrange the processing time and transmission time of the to-be-transmitted packet. The quality of service QoS assurance level of the to-be-transmitted packet helps the access network device accurately match a reliability measure for processing the to-be-transmitted packet. The processing time of the to-be-transmitted packet and the buffer time of the to-be-transmitted packet help the access network device compute transmission time of the to-be-transmitted packet in a wireless network, and perform, on the to-be-transmitted packet, processing such as gating and shaping that reduce a delay and a jitter, to reduce a transmission delay and jitter of the to-be-transmitted packet in the wireless network.

In a possible design, the change of the to-be-transmitted packet includes a change of the size and/or content of the to-be-transmitted packet at an interval of preset duration.

Based on the possible design, the access network device may flexibly adjust resource allocation and bandwidth usage based on the change of the to-be-transmitted packet. If the size and the content of the to-be-transmitted packet are relatively stable, a more stable allocation policy may be for avoiding excessive resource allocation. However, if the size and the content of the to-be-transmitted packet change frequently, resource and bandwidth allocation may be dynamically adjusted based on the change, to meet a real-time transmission requirement.

In a possible design, the statistical rule of the time at which the to-be-transmitted packet arrives at the terminal device includes at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

Based on the possible design, statistics on a time interval between time at which to-be-transmitted packets arrive at the terminal device is collected, to help the access network device learn of a change rule and distribution of the time at which the to-be-transmitted packets arrive at the terminal device, to more accurately allocate an uplink resource to the terminal device. The average time interval provides an average prediction that may be for stabilizing resource allocation. The maximum time interval and the minimum time interval provide a range of an extreme case for arrival of the to-be-transmitted packet at the terminal device, to help evaluate a resource requirement and availability. The median provides an intermediate value of the time intervals, and may be used as a balance factor for proper resource allocation and prediction.

In a possible design, the QoS assurance level of the to-be-transmitted packet is determined based on content of the to-be-transmitted packet.

Based on the foregoing two possible designs, that the QoS assurance level of the to-be-transmitted packet is determined based on the content of the to-be-transmitted packet may implement differentiated resource allocation.

In a possible design, when the to-be-transmitted packet includes a control instruction, the QoS assurance level of the to-be-transmitted packet is a first QoS assurance level; and when the to-be-transmitted packet includes duplicate content, the QoS assurance level of the to-be-transmitted packet is a second QoS assurance level, where the second QoS assurance level is lower than the first QoS assurance level.

Based on the foregoing two possible designs, the QoS assurance level of the to-be-transmitted packet that includes the control instruction is set to the first QoS assurance level, to ensure that the to-be-transmitted packet is preferentially transmitted and processed, thereby reducing a risk of loss or a delay of the instruction. In addition, the QoS assurance level of the to-be-transmitted packet that includes the duplicate content is set to the second QoS assurance level, so that less resources can be allocated to to-be-transmitted packets, to avoid a resource waste.

In a possible design, the first message is carried in uplink control information UCI or a medium access control element MAC CE.

Based on the possible design, different carrying media may be for carrying the first message based on different communication scenarios, thereby improving resource scheduling efficiency.

In a possible design, when the first message is carried in the MAC CE, a logical channel identifier LCID value corresponding to the MAC CE is a reserved value.

In a possible design, the reserved value is an integer greater than 36 and less than 43.

Based on the foregoing two possible designs, the reserved value may be for ensuring that the LCID value of the MAC CE that carries the first message is distinguished from another allocated LCID value, thereby avoiding possible misunderstandings and errors. In this way, the MAC CE is extended to carry the first message.

In a possible design, the first message is transmitted on a physical uplink control channel PUCCH or a physical uplink shared channel PUSCH.

Based on the possible design, based on different communication scenarios, the PUCCH or the PUSCH may be selected for efficient transmission of the first message, to improve communication quality and user experience.

In a possible design, when an information amount of the first message is less than a preset threshold, the first message is carried on a PUCCH in a first format; or when the information amount of the first message is greater than or equal to the preset threshold, the first message is carried on a PUCCH in a second format, where a quantity of time domain symbols supported by the PUCCH in the first format is less than or equal to 14, and a quantity of time domain symbols supported by the PUCCH in the second format is greater than 14.

In a possible design, the first format includes a format 3 or a format 4.

Based on the foregoing two possible designs, a used format of the PUCCH is determined based on the information amount of the first message, thereby improving flexibility and transmission efficiency of the PUCCH. When the information amount of the first message is greater than or equal to the preset threshold, the PUCCH in the second format is used, and the quantity of time domain symbols supported by the PUCCH in the second format is greater than 14, so that more information can be carried, and a transmission capacity can be increased, thereby ensuring efficient transmission of a large data amount.

According to a second aspect, a data transmission method is provided, applied to an access network device. The method includes: The access network device receives a first message sent by a terminal device, where the first message is for requesting the access network device to allocate, to the terminal device, a transmission resource for transmitting a to-be-transmitted packet, and the first message includes feature information of the to-be-transmitted packet; the access network device sends a second message to the terminal device, where the second message is for configuring the transmission resource; and the access network device receives the to-be-transmitted packet sent by the terminal device based on the transmission resource.

According to the method in the second aspect, the access network device may determine, based on the received first message that includes the feature information of the to-be-transmitted packet, to accurately allocate, to the terminal device, the transmission resource for transmitting the to-be-transmitted packet, and notify, by using the second message, the terminal device of the transmission resource that has been allocated to the terminal device, thereby improving air interface resource utilization while ensuring accurate and efficient transmission of the to-be-transmitted packet.

In a possible design, the feature information of the to-be-transmitted packet includes at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

In a possible design, the change of the to-be-transmitted packet includes a change of the size and/or content of the to-be-transmitted packet at an interval of preset duration.

In a possible design, the statistical rule of the time at which the to-be-transmitted packet arrives at the terminal device includes at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

In a possible design, the QoS assurance level of the to-be-transmitted packet is determined based on content of the to-be-transmitted packet.

In a possible design, when the to-be-transmitted packet includes a control instruction, the QoS assurance level of the to-be-transmitted packet is a first QoS assurance level; and when the to-be-transmitted packet includes duplicate content, the QoS assurance level of the to-be-transmitted packet is a second QoS assurance level, where the second QoS assurance level is lower than the first QoS assurance level.

In a possible design, the first message is carried in uplink control information UCI or a medium access control element MAC CE.

In a possible design, when the first message is carried in the MAC CE, a logical channel identifier LCID value corresponding to the MAC CE is a reserved value.

In a possible design, the reserved value is an integer greater than 36 and less than 43.

In a possible design, the first message is transmitted on a physical uplink control channel PUCCH or a physical uplink shared channel PUSCH.

In a possible design, when an information amount of the first message is less than a preset threshold, the first message is carried on a PUCCH in a first format; or when the information amount of the first message is greater than or equal to the preset threshold, the first message is carried on a PUCCH in a second format, where a quantity of time domain symbols supported by the PUCCH in the first format is less than or equal to 14, and a quantity of time domain symbols supported by the PUCCH in the second format is greater than 14.

In a possible design, the first format includes a format 3 or a format 4.

For beneficial effects of the possible designs in the second aspect, refer to the descriptions in the first aspect. Details are not described herein again.

According to a third aspect, a communication apparatus is provided. For beneficial effects, refer to the descriptions in the first aspect. Details are not described herein again. The communication apparatus has a function of implementing the behavior in the method instance in the first aspect. The function may be implemented by hardware, or may be implemented by hardware executing corresponding software. The hardware or the software includes one or more modules corresponding to the foregoing function. In a possible design, the communication apparatus includes: a transceiver module, configured to send a first message to an access network device, where the first message is for requesting the access network device to allocate, to a terminal device, a transmission resource for transmitting a to-be-transmitted packet, and the first message includes feature information of the to-be-transmitted packet; the transceiver module, further configured to receive a second message sent by the access network device, where the second message is for configuring the transmission resource; and the transceiver module, further configured to send the to-be-transmitted packet to the access network device based on the transmission resource. The modules may perform corresponding functions in the method example according to the first aspect. For details, refer to detailed descriptions in the method example. Details are not described herein again.

According to a fourth aspect, a communication apparatus is provided. For beneficial effects, refer to descriptions in the second aspect. Details are not described herein again. The communication apparatus has a function of implementing the behavior in the method instance in the second aspect. The function may be implemented by hardware, or may be implemented by hardware executing corresponding software. The hardware or the software includes one or more modules corresponding to the foregoing function. In a possible design, the communication apparatus includes: a transceiver module, configured to receive a first message sent by a terminal device, where the first message is for requesting an access network device to allocate, to the terminal device, a transmission resource for transmitting a to-be-transmitted packet, and the first message includes feature information of the to-be-transmitted packet; the transceiver module, further configured to send a second message to the terminal device, where the second message is for configuring the transmission resource; and the transceiver module, further configured to receive the to-be-transmitted packet sent by the terminal device based on the transmission resource. The modules may perform corresponding functions in the method example according to the second aspect. For details, refer to detailed descriptions in the method example. Details are not described herein again.

According to a fifth aspect, a communication apparatus is provided. The communication apparatus may be the terminal device in the foregoing method embodiments, or may be a chip disposed in the terminal device. The communication apparatus may alternatively be the access network device in the foregoing method embodiments, or may be a chip disposed in the access network device. The communication apparatus includes one or more processors. The one or more processors are configured to run a computer program or instructions. When the one or more processors execute the computer instructions or the instructions, the communication apparatus is caused to perform the data transmission method according to any one of the first aspect or the possible designs in the first aspect, or perform the data transmission method according to any one of the second aspect or the possible designs in the second aspect.

In a possible design, the communication apparatus further includes one or more memories, the one or more memories are coupled to the one or more processors, and the one or more memories are configured to store the foregoing computer program or instructions. In a possible implementation, the memory is located outside the communication apparatus. In another possible implementation, the memory is located inside the communication apparatus. In embodiments of this application, the processor and the memory may alternatively be integrated into one device. In other words, the processor and the memory may alternatively be integrated together. In a possible implementation, the communication apparatus further includes a transceiver. The transceiver is configured to receive information and/or send information.

In a possible design, the communication apparatus further includes one or more communication interfaces, the one or more communication interfaces are coupled to the one or more processors, and the one or more communication interfaces are configured to communicate with a module other than the communication apparatus.

According to a sixth aspect, an embodiment of this application provides a communication apparatus. The communication apparatus may be a first terminal device in the foregoing method embodiments, or may be a chip disposed in the first terminal device. The communication apparatus may alternatively be the access network device in the foregoing method embodiments, or may be a chip disposed in the access network device. The communication apparatus includes an input/output interface and a logic circuit. The input/output interface is configured to input and/or output information. The logic circuit is configured to perform the data transmission method according to any one of the first aspect or the possible designs in the first aspect, or perform the data transmission method according to any one of the second aspect or the possible designs in the second aspect, and perform processing and/or generate information based on information.

According to a seventh aspect, a computer program product is provided. The computer program product includes: computer program code. When the computer program code is run, the method according to any one of the foregoing aspects is performed.

According to an eighth aspect, this application provides a chip system. The chip system includes a processor, configured to implement the method according to any one of the foregoing aspects. In a possible design, the chip system further includes a memory, configured to store program instructions and/or data. The chip system may include a chip, or may include a chip and another discrete device.

According to a ninth aspect, this application provides a computer-readable storage medium. The computer-readable storage medium stores a computer program, and when the computer program is run, the method according to any one of the foregoing aspects is implemented.

According to a tenth aspect, an embodiment of this application provides a computer program. When the computer program is run on a computer, the method according to any one of the foregoing aspects is performed.

According to an eleventh aspect, a communication system is provided. The communication system may include the communication apparatus according to the third aspect and the communication apparatus according to the fourth aspect.

For technical effects brought by any possible implementation of the third aspect to the eleventh aspect, refer to the technical effects brought by any one of the first aspect, the second aspect, or different possible implementations of any one of the first aspect and the second aspect. Details are not described herein again.

It may be understood, that the solutions in the foregoing aspects may be combined if the solutions are not contradictory.

### BRIEF DESCRIPTION OF DRAWINGS

FIG. 1 is a diagram of an existing uplink resource scheduling request process according to an embodiment of this application;
FIG. 2 is a diagram of an existing uplink resource pre-scheduling process according to an embodiment of this application;
FIG. 3 is a diagram of an existing uplink resource grant free scheduling process according to an embodiment of this application;
FIG. 4 is a diagram of a periodic packet transmission method in an industrial logic control scenario according to an embodiment of this application;
FIG. 5 is a diagram of a communication system according to an embodiment of this application;
FIG. 6 is a diagram of composition of a communication apparatus according to an embodiment of this application;
FIG. 7 is an interaction flowchart of a data transmission method according to an embodiment of this application;
FIG. 8 is a diagram of a format of a MAC CE according to an embodiment of this application;
FIG. 9 is a diagram of composition of a communication apparatus according to an embodiment of this application; and
FIG. 10 is a diagram of composition of a communication apparatus according to an embodiment of this application.

### DESCRIPTION OF EMBODIMENTS

Technical terms in embodiments of this application are described below.

**Resource scheduling request message (Scheduling Request, SR)**: information sent by a terminal device to an access network device, and may be for requesting the access network device to allocate an uplink resource to the terminal device.

It may be understood that, if there is no uplink data that needs to be transmitted by the terminal device, the access network device does not need to allocate the uplink resource to the terminal device. If the access network device allocates the uplink resource to the terminal device, a resource waste is caused. Therefore, the terminal device needs to notify the access network device whether there is uplink data that needs to be transmitted by the terminal device, to help the access network device determine whether to allocate the uplink resource to the terminal device. A function of the SR is to notify the access network device that the uplink resource is needed, but does not to notify the access network device of how much uplink data needs to be sent (which is reported by using a buffer status report). After the access network device receives the SR, a quantity of uplink resources allocated by the access network device to the terminal device depends on implementation of the access network device. A common practice is to allocate at least sufficient resources to the terminal device for sending the buffer status report.

**Buffer status report (buffer status report, BSR)**: includes an uplink BSR and a sidelink BSR (Sidelink BSR). The uplink BSR is for providing a first buffer status of the terminal device for the access network device, and the first buffer status is information about an amount of data that needs to be sent and that is stored by the terminal device in an uplink buffer area. The sidelink BSR is for providing a second buffer status of the terminal device for the access network device, and the second buffer status is information about an amount of data that needs to be sent and that is stored by the terminal device in a sidelink buffer area.

**Uplink grant information (UL grant)** (which may also be referred to as uplink resource information (UL Resource)): information sent by the access network device to the terminal device, and indicates an uplink resource that may be used by the terminal device on an uplink. The uplink resource includes time and frequency resources that can be used by the terminal device to send a to-be-transmitted packet.

**Quality of service (quality of service, QoS) assurance level**: a priority and an assurance level provided for the to-be-transmitted packet.

**Uplink control information (uplink control information, UCI)**: a control signal transmitted by the terminal device to the access network device (for example, an eNodeB) in wireless communication. The UCI includes information about uplink resource allocation, a modulation mode, a hybrid automatic repeat request (Hybrid Automatic Repeat Request, HARQ) status, and the like, and is for supporting resource management and scheduling on the uplink.

**Physical uplink control channel (physical uplink control channel, PUCCH)**: a physical channel for transmitting the UCI sent by the terminal device. The PUCCH mainly carries control information such as a scheduling request message (for example, an uplink resource request or a scheduling request) and a HARQ feedback of the terminal device.

**Physical uplink shared channel (physical uplink shared channel, PUSCH)**: a physical channel for transmitting the uplink data of the terminal device. In addition to carrying the uplink data, the PUSCH may further carry a part of the UCI, for example, an ACK/NACK (acknowledgement/negative acknowledgment) feedback.

**Medium access control element (medium access control element, MAC CE)**: a unit for transmitting the control information. The MAC CE includes various control information, such as the scheduling request message, the HARQ feedback, and the ACK/NACK feedback. The MAC CE is encapsulated in a physical resource block (physical resource block, PRB) of the PUCCH or the PUSCH for transmission.

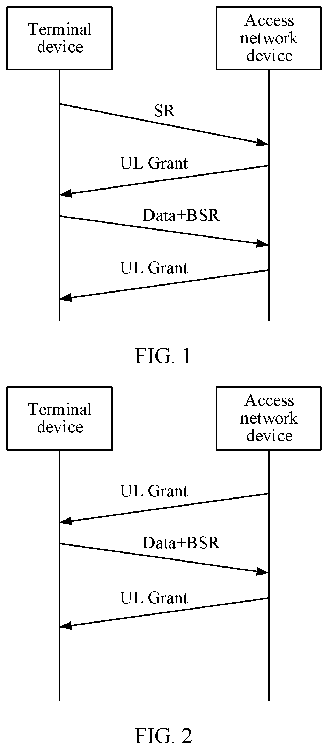

For example, FIG. 1 is a diagram of an existing uplink resource scheduling request process according to this application. When there is uplink data that needs to be transmitted by a terminal device, the terminal device sends a resource scheduling request message SR to an access network device, and the access network device allocates an uplink resource, and delivers the uplink resource to the terminal device by using a UL Grant. The terminal device sends to-be-transmitted data on the uplink resource granted in the UL Grant. When a control resource that is granted in the UL Grant and that is delivered by the access network device is insufficient to transmit to-be-transmitted data that needs to be transmitted by the terminal device currently (that is, after the to-be-transmitted data is sent, there is still data that cannot be completely transmitted in a buffer area of the terminal device), the access network device is notified of buffer area status information by using a BSR when the to-be-transmitted data (Data) is sent, and the access network device continues to perform, after receiving the BSR and when resource scheduling is performed next time, uplink transmission of the to-be-transmitted data in the buffer area.

An uplink SR mechanism may support transmission of an aperiodic packet in a manner in which there is a data reporting situation. However, the SR only feeds back that there is data that needs to be transmitted, and cannot accurately feed back a complete status of uplink data. After receiving the SR, the access network device does not know how much data that needs to be transmitted by the terminal device currently, does not know how to perform corresponding matching processing of resource allocation and transmission performance control for some specific requirements of the data, and can only blindly allocate resources. If the uplink resource granted in the UL Grant is insufficient to complete uplink transmission of all data, the terminal device needs to continue to report the BSR to notify the access network device of scheduling and granting a new uplink resource, to complete uplink transmission of remaining to-be-transmitted data.

In some high-reliability data transmission scenarios (for example, in a scenario in which there are specific requirements on a delay, a jitter, and the like of a real-time data packet of an industrial communication protocol), it is difficult to complete effective and reliable transmission of uplink data transmission based on the SR.

For another example, FIG. 2 is a diagram of an existing uplink resource pre-scheduling process according to this application. In comparison with uplink SR scheduling, an access network device does not consider whether there is uplink data that needs to be transmitted by a terminal device. Provided that there is an uplink resource on an air interface, the access network device periodically pre-schedules the uplink resource, and grants and delivers the uplink resource to the terminal device by using a UL Grant. When there is to-be-transmitted data that needs to be transmitted by the terminal device on an uplink, the terminal device sends the to-be-transmitted data based on the pre-scheduled uplink resource, and does not need to send an SR in advance to request to grant an uplink resource for transmission.

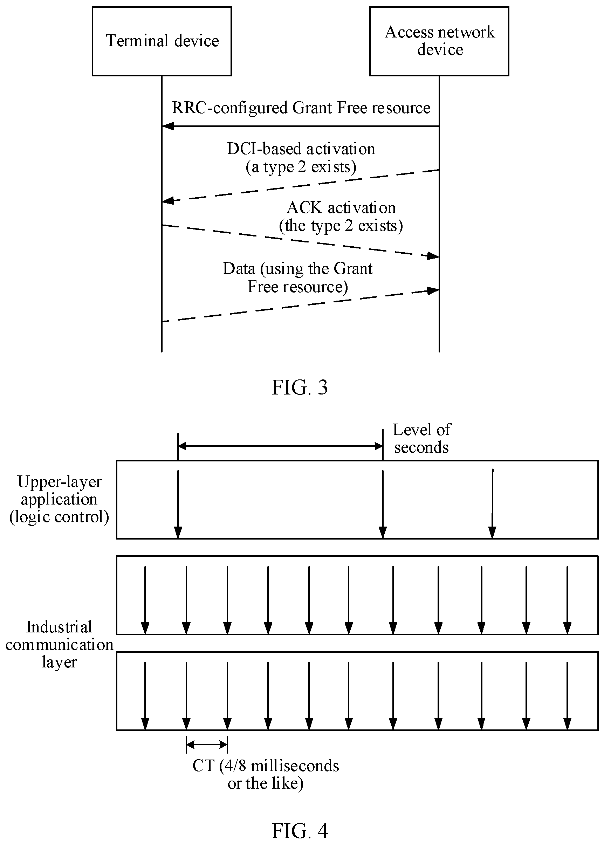

For still another example, FIG. 3 is a diagram of an existing uplink resource grant free scheduling process according to this application. In uplink resource grant free (Grant Free) scheduling, an access network device may configure, by using radio resource control (radio resource control, RRC) signaling, an air interface resource used by a terminal device to transmit to-be-transmitted data. Two types are supported.

Type 1: An RRC configuration takes effect. The terminal device may transmit the to-be-transmitted data on a configured Grant Free resource, does not need an additional activation grant, and does not need to report an SR in advance to request to grant an uplink resource for transmitting the to-be-transmitted data.

Type 2: A configured Grant Free resource is activated by using downlink control information (downlink control information, DCI). After the activation, the terminal device may transmit the to-be-transmitted data (Data) on the configured Grant Free resource.

Compared with uplink pre-scheduling, in the uplink Grant Free scheduling, there is no need to send an uplink UL Grant each time. Instead, an uplink resource used by the terminal device to transmit the to-be-transmitted data is allocated in advance in an RRC signaling configuration manner.

In the uplink pre-scheduling mechanism, it is not considered whether there is uplink data that needs to be transmitted by the terminal device, and the uplink resource is periodically granted to the terminal device. When there is actually no uplink data that needs to be transmitted by the terminal device, a resource is also scheduled and allocated to the terminal device. The allocated resource cannot be used for another purpose, actually resulting in a waste. In addition, continuous pre-scheduling easily causes inter-cell interference. However, this mechanism may be better applied to a service with a strong periodicity, match periodic uplink data transmission, and be for transmitting the uplink data on a periodically granted uplink air interface resource. However, for an aperiodic uplink data transmission service, periodic resource scheduling seriously wastes air interface resources.

Currently, an existing typical industrial communication protocol (like Profinet) in the industrial sector/industry is designed to transmit logic control information of an upper-layer application by using a periodic real-time packet with a small period at a level of milliseconds or dozens of milliseconds. However, actually, a change period of the logic control information of the upper-layer application is far greater than a sending period of the periodic packet on an industrial communication layer. From the perspective of application layer content information transmitted on the industrial communication layer, there is a large amount of duplicate content.

For example, as shown in FIG. 4, for an industrial logic control scenario, a typical Profinet RT protocol is used as an example.

Upper-layer application (industrial device application layer): has a valid control instruction period at a level of seconds.

Industrial communication layer: has a period at a level of milliseconds (for example, 4 ms or 8 ms). Only a small quantity of packets carry a valid control instruction, and most packets do not carry the valid control instruction. Most of content of the packets are the same and repeated.

When an existing industrial communication protocol is for transmission by using a wireless technology, for the foregoing periodic packet in the industrial communication protocol, a non-differentiated reliability assurance level is used for a packet with the valid control instruction and the repeated packet. Excessive assurance on duplicate content wastes air interface transmission resources, reduces air interface resource utilization, and increases networking costs.

By setting different packet content, differentiated assurance processing is performed on the packet with the valid control instruction and the repeated packet in a wireless network. For example, for the repeated packet, packet compression is performed and a low-reliability transmission policy is used; and for the packet with the valid control instruction, a method, for example, a high-reliability transmission policy is used. After the processing, an existing periodic packet feature changes, a packet size changes because of the compression of the repeated packet, and the packet with the valid control instruction is aperiodic. In this way, a packet that needs assurance from the high-reliability transmission policy in a network changes from a periodic packet to an aperiodic packet. An existing wireless network uplink transmission mechanism cannot effectively and reliably support uplink packet transmission in this case.

In addition, when the packet of the industrial communication protocol is transmitted by using the wireless technology, there is also a requirement of reducing a transmission jitter of the packet in the wireless network. In an implementation, the wireless network measures a delay of the packet passing through each link on a wireless network path, to compute an overall delay of the packet entering and leaving the wireless network; and performs jitter reduction by using an appropriate mechanism (for example, a gating mechanism) to reduce a jitter. Computing the overall delay of the packet entering and leaving the wireless network proposes a new requirement on the network: A proper mechanism is needed for supporting effectively transmitting, to a peer end through an air interface, delay information measured by a wireless terminal (uplink) and a wireless network side (downlink).

In view of this, this application provides a data transmission method, to improve air interface resource utilization while ensuring accurate and efficient transmission of data. The method includes: A terminal device sends a first message to an access network device, where the first message is for requesting the access network device to allocate, to the terminal device, a transmission resource for transmitting a to-be-transmitted packet, and the first message includes feature information of the to-be-transmitted packet; the terminal device receives a second message sent by the access network device, where the second message is for configuring the transmission resource; and the terminal device sends the to-be-transmitted packet to the access network device based on the transmission resource.

In this way, the access network device may better learn of a requirement and a feature of the to-be-transmitted packet based on the first message, and accurately allocate, to the terminal device, the transmission resource for transmitting the to-be-transmitted packet, to meet a requirement of the terminal device, thereby improving air interface resource utilization while ensuring accurate and efficient transmission of the to-be-transmitted packet.

The technical solution provided in this application is applicable to an aperiodic service, and also applicable to a periodic service.

The following describes the data transmission method provided in embodiments of this application with reference to the accompanying drawings in this specification.

The communication method provided in embodiments of this application may be used in any communication system. The communication system may be a third generation partnership project (third generation partnership project, 3GPP) communication system, for example, a long term evolution (long term evolution, LTE) system, or may be a 5G mobile communication system, a new radio (new radio, NR) communication system, or a new radio vehicle-to-everything (vehicle-to-everything, NR V2X) system, or may be used in an LTE and 5G hybrid networking system, a non-terrestrial communication network (non-terrestrial network, NTN) system, a device-to-device (device-to-device, D2D) communication system, a machine-to-machine (machine-to-machine, M2M) communication system, an internet of things (internet of things, IoT), and another next generation communication system, for example, a future communication system like 6G, or may be a non-3GPP communication system. This is not limited.

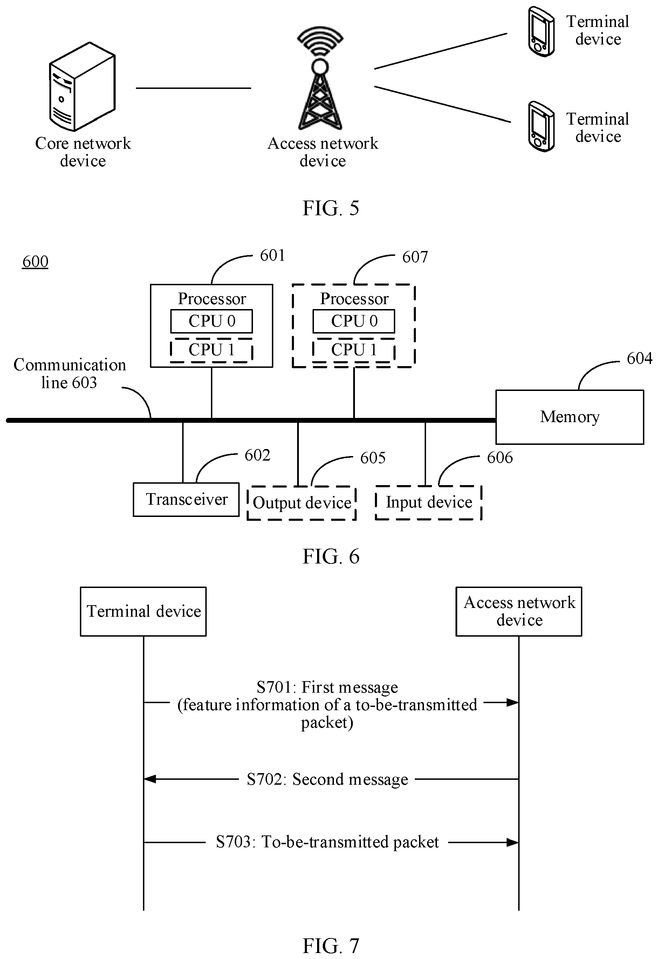

The following describes the communication system provided in this embodiment of this application by using FIG. 5 as an example.

FIG. 5 is a diagram of a communication system according to an embodiment of this application. As shown in FIG. 5, the communication system may include one or more terminal devices, an access network device (or described as a radio access network device), and a core network device.

In FIG. 5, the terminal device may be located in cell coverage of the access network device, and the terminal device may be connected to the access network device in a wireless manner. For example, the terminal device is connected to the access network device by using an NR-Uu interface, and the terminal device may perform air interface communication with the access network device on an uplink (uplink, UL) or a downlink (downlink, DL). For example, the terminal device may send uplink data to the access network device in an UL direction on a PUSCH, and the access network device may send downlink data to the terminal device in a DL direction on a physical downlink shared channel (physical downlink shared channel, PDSCH).

The terminal device in FIG. 5 may be a device having a wireless transceiver function or a chip or a chip system that can be disposed in the device, may allow a user to access a network, and is a device configured to provide voice and/or data connectivity for the user. The terminal device supports 3GPP-defined sending of a packet on a control plane and a user plane. The terminal device may be located at a fixed position, or may be movable. The terminal device may also be referred to as a user equipment (user equipment, UE), a subscriber unit (subscriber unit), a terminal (terminal), a mobile station (mobile station, MS), a mobile terminal (mobile terminal, MT), or the like. Specifically, the terminal device in FIG. 5 may be a cellular phone (cellular phone), a smartphone (smartphone), a wireless data card, a mobile phone (mobile phone), a personal digital assistant (personal digital assistant, PDA) computer, a tablet computer or a computer having a wireless transceiver function, a wireless modem (modem), a handheld device (handset), or a laptop computer (laptop computer). Alternatively, the terminal device may be a VR terminal, an AR terminal, a wireless terminal in industrial control, a wireless terminal in self-driving, a wireless terminal in telemedicine, a wireless terminal in smart grid, a wireless terminal in transportation safety, a wireless terminal in smart city (smart city), a wireless terminal in smart home (smart home), a machine type communication (machine type communication, MTC) terminal, a vehicle-mounted terminal, a vehicle having a vehicle-to-vehicle (vehicle-to-vehicle, V2V) communication capability, an intelligent connected vehicle, an uncrewed aerial vehicle having an uncrewed aerial vehicle to uncrewed aerial vehicle (UAV to UAV, U2U) communication capability, or the like. This is not limited.

The access network device in FIG. 5 may be any device that is deployed in an access network and that can perform wireless communication with the terminal device, may be described as an access device that is used by the terminal device to access the communication system in a wireless manner, or may be a chip or a chip system that can be disposed in the device, and is mainly configured to implement functions such as a wireless physical control function, resource scheduling and radio resource management, radio access control, and mobility management. The access network device may be further connected to the core network device in a wireless or wired manner. The access network device can be connected to the terminal device through the NR-Uu interface. Specifically, the access network device may be a device that supports wired access, or may be a device that supports wireless access. For example, the access network device may be an access network (access network, AN)/radio access network (radio access network, RAN) device, and includes a plurality of AN/RAN nodes. The AN/RAN node may be an access point (access point, AP), a NodeB (NodeB, NB), a macro base station, a micro base station (or described as a small cell), a pico base station, a balloon station, a relay station, an enhanced NodeB (enhanced NodeB, eNB), a next generation eNB (next generation eNB, ng-eNB), a next generation NodeB (next generation NodeB, gNB), a base station in a 5G communication system, a base station in a future mobile communication system or an access node in a wireless fidelity (wireless fidelity, Wi-Fi) system, a transmission reception point (transmission reception point, TRP), a transmission point (transmission point, TP), a transmission measurement function (transmission measurement function, TMF), a wearable device, a vehicle-mounted device, another access node, or the like. A specific technology and a specific device form that are used by the access network device are not limited in embodiments of this application.

Alternatively, the access network device may be of a central unit (central unit, CU)/distributed unit (distributed unit, DU) architecture. In this case, the access network device may include two network elements: a CU and a DU. Alternatively, the access network device may be of a control plane-user plane (control plane-user plane, CP-UP) architecture. In this case, the access network device may include three network elements: a control plane of a CU (CU-CP), a user plane of the CU (CU-UP), and a DU. This is not limited.

Optionally, the access network device and the terminal device may be deployed on the land, including an indoor device, an outdoor device, a handheld device, or a vehicle-mounted device; may be deployed on the water; or may be deployed on an airplane, a balloon, and a satellite in the air. Application scenarios of the access network device and the terminal device are not limited in embodiments of this application.

Optionally, embodiments of this application are applicable to downlink signal transmission, uplink signal transmission, and D2D signal transmission. For the downlink signal transmission, a sending device is the access network device. Correspondingly a receiving device is the terminal device. For the uplink signal transmission, a sending device is the terminal device. Correspondingly a receiving device is the access network device. For the D2D signal transmission, a sending device is the terminal device. Correspondingly, a receiving device is also the terminal device. A direction of signal transmission is not limited in embodiments of this application.

Optionally, communication may be performed between the access network device and the terminal device, and between terminal devices by using a licensed spectrum, an unlicensed spectrum, or both a licensed spectrum and an unlicensed spectrum. Communication may be performed between the access network device and the terminal device, and between the terminal devices by using a spectrum below 6 GHz, a spectrum above 6 GHz, or both a spectrum below 6 GHz and a spectrum above 6 GHz. Spectrum resources used between the access network device and the terminal device are not limited in embodiments of this application.

The core network device in FIG. 5 is mainly responsible for providing a user connection, performing user management, and completing service bearing, and serves as a bearer network to provide an interface to an external network.

Optionally, the core network device and the access network device may be independent and different physical devices, functions of the core network device and logical functions of the access network device may be integrated into a same physical device, a part of functions of the core network device and a part of functions of the radio access network device may be integrated into one physical device, or the core network device and the access network device may be disposed in a chip or a chip system of the foregoing device. This is not limited.

For example, a control plane network element 5GC in the core network device interacts with the access network device by using an N2 interface, and a user plane network element (user plane function, UPF) interacts with the access network device by using an N3 interface. The core network device provides terminations of the control plane and user plane, and provides functions such as a user subscription storage and management function, a mobility management function, and a policy control function, functions as an egress gateway for data connections of centralized forwarding to connect to an external data network, and functions as the anchor point for data connections when UEs move.

It should be noted that, the terminal device, the access network device, and the core network device in embodiments of this application each may be one or more chips, or a system-on-a-chip (system-on-a-chip, SoC), or the like. FIG. 5 is merely an example diagram, and a quantity of devices included in FIG. 5 is not limited. In addition, in addition to the devices shown in FIG. 5, the communication system may further include another device, for example, may further include a wireless relay device and a wireless backhaul device. Names of the devices and the links in FIG. 5 are not limited. In addition to the names shown in FIG. 5, the devices and the links may alternatively have other names. This is not limited.

In a specific implementation, as shown in FIG. 5, for example, each terminal device or each access network device may use a composition structure shown in FIG. 6, or include components shown in FIG. 6. FIG. 6 is a diagram of composition of a communication apparatus 600 according to an embodiment of this application. The communication apparatus 600 may be a terminal device, or a chip or a system on chip in the terminal device; or may be an access network device, or a chip or a system on chip in the access network device. As shown in FIG. 6, the communication apparatus 600 includes a processor 601, a transceiver 602, and a communication line 603.

Further, the communication apparatus 600 may further include a memory 604. The processor 601, the memory 604, and the transceiver 602 may be connected through the communication line 603.

The processor 601 is a central processing unit (central processing unit, CPU), a general-purpose processor network processor (network processor, NP), a digital signal processor (digital signal processor, DSP), a microprocessor, a microcontroller, a programmable logic device (programmable logic device, PLD), or any combination thereof. The processor 601 may alternatively be another apparatus having a processing function, for example, a circuit, a device, or a software module. This is not limited.

The transceiver 602 is configured to communicate with another device or another communication network. The another communication network may be Ethernet, a radio access network (radio access network, RAN), a wireless local area network (wireless local area networks, WLAN), or the like. The transceiver 602 may be a module, a circuit, a transceiver, or any apparatus that can implement communication.

The communication line 603 is configured to transfer information between components included in the communication apparatus 600.

The memory 604 is configured to store instructions. The instructions may be computer programs.

The memory 604 may be a read-only memory (read-only memory, ROM) or another type of static storage device that can store static information and/or instructions; may be a random access memory (random access memory, RAM) or another type of dynamic storage device that can store information and/or instructions; or may be an electrically erasable programmable read-only memory (electrically erasable programmable read-only memory, EEPROM), a compact disc read-only memory (compact disc read-only memory, CD-ROM) or another optical disc storage, an optical disc storage (including a compact optical disc, a laser disc, an optical disc, a digital general-purpose disc, a Blu-ray disc, or the like), a magnetic disk storage medium, or another magnetic storage device.

It should be pointed that, the memory 604 may exist independently of the processor 601, or may be integrated with the processor 601. The memory 604 may be configured to store instructions, program code, some data, or the like. The memory 604 may be located in the communication apparatus 600, or may be located outside the communication apparatus 600. This is not limited. The processor 601 is configured to execute the instructions stored in the memory 604, to perform a data transmission method provided in the following embodiment of this application.

In an example, the processor 601 may include one or more CPUs, for example, a CPU 0 and a CPU 1 in FIG. 6.

In an optional implementation, the communication apparatus 600 includes a plurality of processors. For example, in addition to the processor 601, the communication apparatus 600 may further include a processor 607.

In an optional implementation, the communication apparatus 600 further includes an output device 605 and an input device 606. For example, the input device 606 is a device like a keyboard, a mouse, a microphone, or a joystick, and the output device 605 is a device like a display or a speaker (speaker).

It should be pointed that, the communication apparatus 600 may be a desktop computer, a portable computer, a network server, a mobile phone, a tablet computer, a wireless terminal, an embedded device, a chip system, or a device having a structure similar to that in FIG. 6. In addition, the composition structure shown in FIG. 6 does not constitute a limitation on the communication apparatus. In addition to the components shown in FIG. 6, the communication apparatus may include more or fewer components than those shown in FIG. 6, or some components may be combined, or there may be a different component layout.

In this embodiment of this application, the chip system may include a chip, or may include a chip and another discrete device.

In addition, actions, terms, and the like in embodiments of this application may be mutually referenced. This is not limited. In embodiments of this application, names of messages exchanged between devices, names of parameters in the messages, or the like are merely examples. Other names may alternatively be used during specific implementation. This is not limited.

With reference to the communication system shown in FIG. 5, refer to FIG. 7. A data transmission method provided in embodiments of this application is described. A terminal device may be any terminal device in the communication system shown in FIG. 5, and an access network device may be any access network device in the communication system shown in FIG. 5. The terminal device and the access network device described in the following embodiments each may have the components shown in FIG. 6. Processing performed by a single execution body (the terminal device or the access network device) shown in embodiments of this application may alternatively be performed by a plurality of execution bodies. The execution bodies may be logically and/or physically separated. This is not limited.

FIG. 7 is an interaction flowchart of a data transmission method according to an embodiment of this application. As shown in FIG. 7, the method includes the following steps.

S701: A terminal device sends a first message to an access network device. Correspondingly, the access network device receives the first message sent by the terminal device.

The first message is for requesting the access network device to allocate, to the terminal device, a transmission resource for transmitting a to-be-transmitted packet, and the first message includes feature information of the to-be-transmitted packet. The first message may also have another name, for example, a resource scheduling request message. The to-be-transmitted packet may also have another name, for example, to-be-transmitted data, uplink data, or up-link data.

In a possible design, the feature information of the to-be-transmitted packet includes at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

The size of the to-be-transmitted packet includes at least one of the following: a quantity of bytes of the to-be-transmitted packet, a size of each of data packets obtained by dividing the to-be-transmitted packet in a transmission process, and a size of a transport block corresponding to the to-be-transmitted packet. The quantity of bytes is usually a specific value, and accurately indicates an actual size of the to-be-transmitted packet. The size of the data packet and the size of the transport block are more for segmenting and scheduling the transmission process of the to-be-transmitted packet. The size of the data packet is usually measured in bytes and may vary in the transmission process. A plurality of data packets are combined into a complete to-be-transmitted packet for transmission.

Binning quantization for byte (bit) encoding based on a range of the quantity of bytes, the size of the data packet, or the size of the transport block is a common method, and is similar to a byte encoding mode in a current BSR. The method may be used for binning the size of the to-be-transmitted packet. In this encoding mode, to-be-transmitted packets of different sizes are divided into a plurality of bins, and each bin is mapped to a specific bit encoding value. For example, a smaller size range of the to-be-transmitted packet may be mapped to a smaller bit encoding value, and a larger size range of the to-be-transmitted packet may be mapped to a larger bit encoding value. In this manner, the to-be-transmitted packets of different sizes may be represented by using a smaller quantity of bit encoding values, to implement quantization and encoding for the size of the to-be-transmitted packet. In this encoding mode, bit resources may be more effectively used in the transmission process, and the to-be-transmitted packets of different sizes are optimized and scheduled.

In a possible design, the change of the to-be-transmitted packet includes a change of the size and/or content of the to-be-transmitted packet at an interval of preset duration. The preset duration may be determined based on a pre-agreement or may be indicated by signaling. This helps the access network device flexibly adjust resource allocation and bandwidth usage based on the change of the to-be-transmitted packet.

For example, it is assumed that in a real-time video stream transmission system, one frame of video data is transmitted every second, and a size and content in each frame may be different. The system checks and indicates a size and content of a to-be-transmitted packet at an interval of 1 second. At an initial moment, the size of the to-be-transmitted packet is 100 KB, and the content of the to-be-transmitted packet is a first frame of video data. After 1 second, the size of the to-be-transmitted packet is 120 KB, and the content of the to-be-transmitted packet is a second frame of video data. Therefore, the system indicates that the size of the to-be-transmitted packet increases by 20 KB, and the content of the to-be-transmitted packet has been updated to the second frame of video data. Therefore, in the transmission process, a transmission resource corresponding to the to-be-transmitted packet may be dynamically allocated based on a change of the size and the content of the to-be-transmitted packet, to ensure smooth transmission of real-time video.

In a possible design, the statistical rule of the time at which the to-be-transmitted packet arrives at the terminal device includes at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device. This helps the access network device learn of a change rule and distribution of time at which to-be-transmitted packets arrive at the terminal device, to more accurately allocate, to the terminal device, the transmission resource for transmitting the to-be-transmitted packet.

For example, it is assumed that there is a real-time audio stream transmission system, and each audio packet is transmitted to the terminal device by using a network. When collected timestamps at which five audio packets arrive at the terminal device are [1 ms, 2 ms, 4 ms, 9 ms, 10 ms], an average time interval between time at which two consecutive audio packets arrive at the terminal device is 2.5 ms, a maximum time interval between time at which two consecutive audio packets arrive at the terminal device is 10 ms, a minimum time interval between time at which two consecutive audio packets arrive at the terminal device is 1 ms, and a median of time intervals between time at which two consecutive audio packets arrive at the terminal device is 4 ms.

In a possible design, the QoS assurance level of the to-be-transmitted packet is determined based on the content of the to-be-transmitted packet. In this way, for a to-be-transmitted packet with a high QoS assurance level, the access network device may provide a high priority and more resources to ensure transmission reliability and a low delay of the to-be-transmitted packet. For a to-be-transmitted packet with a low QoS assurance level, the access network device may provide a low priority and allocation of less resources.

In a possible design, that the QoS assurance level of the to-be-transmitted packet is determined based on the content of the to-be-transmitted packet includes: When the to-be-transmitted packet includes a control instruction, the QoS assurance level of the to-be-transmitted packet is a first QoS assurance level; and when the to-be-transmitted packet includes duplicate content, the QoS assurance level of the to-be-transmitted packet is a second QoS assurance level. The second QoS assurance level is lower than the first QoS assurance level. In this way, the QoS assurance level of the to-be-transmitted packet that includes the duplicate content is reduced, so that the access network device can reduce transmission resource allocation to the to-be-transmitted packet, or reduce a priority of allocating the transmission resource to the to-be-transmitted packet, to help reduce occupation of the duplicate content on an air interface resource.

In a possible design, the processing time of the to-be-transmitted packet is a time difference between a moment at which the terminal device receives the to-be-transmitted packet and a moment at which the terminal device completes processing on the to-be-transmitted packet. The buffer time of the to-be-transmitted packet is a time difference between the moment at which the terminal device receives the to-be-transmitted packet and a moment at which the to-be-transmitted packet is sent by the terminal device, or the buffer time of the to-be-transmitted packet is a time difference between the moment at which the terminal device receives the to-be-transmitted packet and a moment at which the to-be-transmitted packet arrives at the access network device.

It may be understood that, the access network device receives the processing time of the to-be-transmitted packet and the buffer time of the to-be-transmitted packet, to help the access network device compute transmission time of the to-be-transmitted packet in a wireless network, and perform, on the to-be-transmitted packet, processing such as gating and shaping that reduce a delay and a jitter, to reduce a transmission delay and jitter of the to-be-transmitted packet in the wireless network.

For example, it is assumed that there is a video conference system, and a to-be-transmitted packet is video data. When a moment at which the terminal device receives a video packet is 10:00:00, and a moment at which processing on the packet is completed is 10:00:05, processing time of the video data is 5 seconds.

For another example, it is assumed that there is a file transfer system, and a to-be-transmitted packet is file data. When a moment at which the terminal device receives the file data is 10:30:00, and a moment at which the file data is sent is 10:30:02, buffer time of the file data is 2 seconds.

For still another example, it is assumed that there is a network streaming media system, and a to-be-transmitted packet is audio stream data. When a moment at which the terminal device receives an audio stream packet is 15:00:00, and a moment at which the packet arrives at the access network device is 15:00:05, buffer time is 5 seconds.

In a possible design, when the to-be-transmitted packet is a periodic packet, the feature information of the to-be-transmitted packet further includes a statistical record of a difference between time at which the to-be-transmitted packet arrives at the terminal device in a historical time period and expected time of arrival in the historical time period, and a statistical record of a difference between time at which the to-be-transmitted packet arrives at the terminal device in a current time period and expected time of arrival in the current time period.

For example, it is assumed that timestamps at which a total of 30 to-be-transmitted packets arrive at the terminal device are collected in a historical time period. In this case, statistical records of differences between the timestamps and expected time of arrival in the historical time period are [+0.2 seconds, -0.1 seconds, +0.3 seconds, ...]. It is assumed that timestamps at which a total of two packets arrives at the terminal device are collected in a current time period. In this case, statistical records of differences between the timestamps and expected time of arrival in the current time period are [-0.2 seconds, +0.1 seconds, ...].

In a possible design, the first message is carried in uplink control information UCI or a medium access control element MAC CE.

In a possible design, when the first message is carried in the UCI, the UCI may further carry a HARQ ACK/NACK and/or channel state feedback information (channel state information, CSI). This is not limited herein.

In a possible design, the first message is transmitted on a physical uplink control channel PUCCH or a physical uplink shared channel PUSCH.

In a possible design, when the first message is transmitted on the physical uplink control channel PUCCH or the physical uplink shared channel PUSCH, the first message is transmitted in an independent encoding mode or is transmitted in a joint encoding mode with another type of UCI on the PUCCH or the PUSCH. The used independent encoding mode may be a pre-configured independent encoding mode, or may be indicated by signaling.

It may be understood that, selecting to transmit the first message in the independent encoding mode may be transmission independent of that of other information, so that the first message is transmitted more flexibly, and mutual interference between information can be reduced. The joint encoding mode may improve utilization of radio resources, thereby helping improve communication efficiency and throughput. In addition, an encoding mode of the first message is flexibly selected based on different communication scenarios and requirements, so that communication performance and effects can be further improved.

In a possible design, when an information amount of the first message is less than a preset threshold, the first message is carried on a PUCCH in a first format; or when the information amount of the first message is greater than or equal to the preset threshold, the first message is carried on a PUCCH in a second format, where a quantity of time domain symbols supported by the PUCCH in the first format is less than or equal to 14, and a quantity of time domain symbols supported by the PUCCH in the second format is greater than 14.

In a possible design, the first format includes a format 3 or a format 4.

For example, currently, when two pilots are removed from 14 symbols of a PUCCH long format 1 RB, maximum transmission is as follows: 12(Symb)*12 (RE)*2(QPSK)*0.8(Maximum bit rate)-11(CRC)=219 bits; and
in Format #4, four UEs are multiplexed and each UE transmits up to 54 bits.

If both existing PUCCH Format #4 and Format #3 may meet a transmission requirement of the first message, a PUCCH format does not need to be extended. If the information amount of the first message that needs to be transmitted exceeds a limit of Format #4 and Format #3, the PUCCH format needs to be extended, and a quantity of supported OFDM symbols needs to be extended. Table 1 describes PUCCH Formats and capabilities defined in 3GPP.

**Table 1**

| PUCCH Format | Quantity of OFDM symbols | Quantity of bits |
|---|---|---|
| 0 | 1 or 2 | Less than or equal to 2 |
| 1 | 4 to 14 | Less than or equal to 2 |
| 2 | 1 or 2 | Greater than 2 |
| 3 | 4 to 14 | Greater than 2 |
| 4 | 4 to 14 | Greater than 2 |

In 3GPP TS 38.300-5.3.3, Format #0: a short PUCCH, which uses one or two symbols, carries a small UCI load of up to two bits, and has a UE multiplexing capacity of up to 6 UEs in a single physical resource block (physical resource block, PRB), where a payload of each UE is 1 bit.

Format #1: a long PUCCH, which uses 4 to 14 symbols, carries a small UCI load of up to two bits, and has a UE multiplexing capacity of up to 84 UEs (without frequency hopping) or 36 UEs (with frequency hopping) in a single PRB.

Format #2: a short PUCCH, which uses one or two symbols, carries a large UCI load of more than two bits, and has no UE multiplexing capability in a single PRB.

Format #3: a long PUCCH, which uses 4 to 14 symbols, carries a large UCI load, and has no UE multiplexing capability in a single PRB.

Format #4: a long PUCCH, which uses 4 to 14 symbols, carries a medium-size UCI load, and has a UE multiplexing capacity of up to 4 UEs in a single PRB.

In a possible design, when the first message is carried in the MAC CE, a logical channel identifier LCID value corresponding to the MAC CE is a reserved value.

In a possible design, the reserved value is an integer greater than 36 and less than 43.

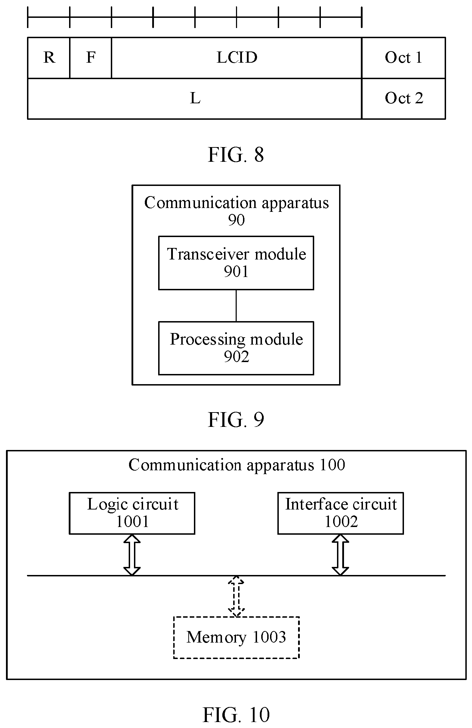

For example, FIG. 8 is a diagram of a format of a MAC CE. Table 2 provides uplink LCID values defined in Table 6.2.1-2. With reference to FIG. 8 and Table 2, a MAC CE format with an 8-bit L field shown in Figure 6.1.2-1 in 3GPP TS 38.321 may be used. Based on the uplink LCID values defined in current Table 6.2.1-2 in the 3GPP protocol, a reserved value, for example, an LCID value corresponding to code points/indexes 37 to 42 in Table 2, is defined as a scheduling request message.

**Table 2**

| Code point/Index | LCID value |
|---|---|
| 0 | Common control channel of a size of 64 bits, which is for a non-RedCap UE |
| 1 to 32 | Logical channel identifiers of dedicated control channels and dedicated transport channels |
| 33 | Extended logical channel ID field, which is represented by two bytes |
| 34 | Extended logical channel ID field, which is represented by one byte |
| 35 | Common control channel of a size of 48 bits, which is for a RedCap UE |
| 36 | Common control channel of a size of 64 bits, which is for a RedCap UE |
| 37 to 42 | Reserved value |
| 43 | Truncated enhanced BFR, which is represented by one byte |
| 44 | Timing advance report |
| 45 | Truncated sidelink BSR |
| 46 | Sidelink BSR |
| 47 | Reserved |
| 48 | Listen before transmit (Listen Before Transmit, LBT) fault, which is represented by four bytes |
| 49 | LBT fault, which is represented by one byte |
| 50 | BFR, which is represented by one byte |
| 51 | Truncated BFR, which is represented by one byte |
| 52 | Common control channel of a size of 48 bits, which is for a non-RedCap UE |
| 53 | Recommended bit rate query |
| 54 | Multi-item packet header reporting (Packet Header Reporting, PHR) information, which is represented by four bytes |
| 55 | Configured grant confirmation |
| 56 | Multi-item PHR information, which is represented by one byte |
| 57 | Single-item PHR information |
| 58 | Cell wireless network temporary identifier |
| 59 | Short-truncated BSR |
| 60 | Long-truncated BSR; |
| 61 | Short BSR |
| 62 | Long BSR |
| 63 | Filled |

In a possible design, the terminal device determines the feature information of the to-be-transmitted packet based on capability information of the terminal device. The feature information of the to-be-transmitted packet is determined based on the capability information of the terminal device, so that a breakdown of the terminal device caused by increased processing pressure of the terminal device can be avoided.

In a possible design, when the terminal device does not support computation on the processing time of the to-be-transmitted packet or the buffer time of the to-be-transmitted packet, or when a current load of the terminal device exceeds a preset value, the feature information of the to-be-transmitted packet does not include the processing time of the to-be-transmitted packet or the buffer time of the to-be-transmitted packet.

In a possible design, the feature information that is of the to-be-transmitted packet and that is determined by the terminal device based on the capability information of the terminal device does not include the quality of service QoS assurance level of the to-be-transmitted packet, and the access network device may perform assurance according to a default policy. The default policy is a QoS flow-level assurance policy or is statically configured.

S702: The access network device sends a second message to the terminal device. Correspondingly, the terminal device receives the second message sent by the access network device.

The second message is for configuring the transmission resource. The transmission resource may include a time domain resource and a frequency domain resource. The second message may also have another name, for example, uplink grant information, or uplink resource information.

In a possible design, the second message may include a grant time window, a frame structure, a scheduling rule, a transmit power, and a transmission parameter.

The grant time window specifies that the terminal device is allowed to transmit the to-be-transmitted packet in a specific time window. This helps coordinate and schedule packet transmission by different terminal devices, and perform fair resource allocation.

The frame structure and the scheduling rule notify the terminal device when the to-be-transmitted packet can be transmitted and how to perform scheduling on a slot and a resource, to avoid collision and interference and improve network efficiency.

The transmit power and the transmission parameter notify the terminal device of a transmit power, a modulation scheme, an encoding parameter, and the like that should be used. This helps the terminal device comply with a network requirement in a transmission process, and optimize transmission quality and performance.

It may be understood that, after receiving the second message, the terminal device may transmit the to-be-transmitted packet in a specified transmission resource range based on content included in the second message. This grant mechanism may maximize utilization of network resources and ensure fair sharing and efficient transmission between different terminal devices.

S703: The terminal device sends the to-be-transmitted packet to the access network device based on the transmission resource. Correspondingly, the access network device receives the to-be-transmitted packet sent by the terminal device based on the transmission resource.

In a possible design, after receiving the to-be-transmitted packet based on the transmission resource, the access network device processes the to-be-transmitted packet based on the feature information of the to-be-transmitted packet, to obtain a processed to-be-transmitted packet; and then the access network device forwards the processed to-be-transmitted packet to a next-level network processing unit, or locally performs operations such as storage, buffering, and scheduling.

In a possible design, that the access network device processes the to-be-transmitted packet based on the feature information of the to-be-transmitted packet includes: adjusting the scheduled transmission resource, accurately matching a resource for the size of the to-be-transmitted packet, and performing a reliability measure that is accurately matched for processing the to-be-transmitted packet based on the QoS assurance level of the to-be-transmitted packet.

In a possible design, that the access network device processes the to-be-transmitted packet based on the feature information of the to-be-transmitted packet includes: computing a complete delay of the to-be-transmitted packet in the wireless network based on the statistical rule of the time at which the to-be-transmitted packet arrives at the terminal device, the processing time of the to-be-transmitted packet, the buffer time of the to-be-transmitted packet, a delay of the network transmitting the to-be-transmitted packet, and a transmission delay in the network; and performing processing such as accurate gating and shaping on the to-be-transmitted packet based on the complete delay of the to-be-transmitted packet in the wireless network. This helps reduce a transmission jitter of the to-be-transmitted packet in the wireless network, and may also be used for statistics collection on an uplink end-to-end transmission delay, fault locating, and the like.

In a possible design, when the to-be-transmitted packet is a periodic packet, and time at which the terminal device sends the to-be-transmitted packet is not synchronized with time at which the access network device receives the to-be-transmitted packet, a scheduling occasion of the periodic packet at each scheduling point of an air interface is adjusted, to match/compensate for a time drift of the periodic packet arriving at the access network device, thereby improving transmission experience of the periodic packet.

Based on this, for a problem that existing uplink SR scheduling cannot accurately feed back a complete status of a to-be-transmitted packet, feature information of the to-be-transmitted packet is added to the SR, thereby improving integrity of information feedback and effectiveness of reliability assurance performed on the to-be-transmitted packet. Correspondingly, after a terminal device adds the feature information of the to-be-transmitted packet to the SR, an access network device may perform effective assurance processing on the to-be-transmitted packet based on the feature information of the received to-be-transmitted packet, thereby improving reliable transmission of the to-be-transmitted packet in a wireless network. In addition, for a problem that air interface resource utilization is low and a waste is serious because of existing uplink pre-scheduling/Grant Free periodical blind scheduling, in an uplink transmission mechanism in which the feature information of the to-be-transmitted packet is added to the SR, only when there is an actual to-be-transmitted packet, an air interface resource scheduled by the access network device is reported for transmission of the to-be-transmitted packet, thereby resolving a problem that the air interface resource is seriously wasted because of the periodical blind scheduling.

It should be noted that, the methods provided in embodiments of this application may be implemented separately, or may be implemented in combination. This is not limited.

It may be understood that, in embodiments of this application, an execution body may perform a part or all of the steps in embodiments of this application. The steps or operations are merely examples. Embodiments of this application may further include performing other operations or variations of various operations. In addition, the steps may be performed in a sequence different from that presented in embodiments of this application, and not all the operations in embodiments of this application may be necessarily performed.

The foregoing mainly describes the solutions provided in embodiments of this application from a perspective of interaction between devices. It may be understood that, to implement the functions in the foregoing embodiments, the devices include corresponding hardware structures and/or software modules for performing the functions. A person of ordinary skill in the art should easily be aware that, in combination with algorithms and steps in the examples described in embodiments applied in this specification, this application can be implemented by hardware or a combination of hardware and computer software. Whether a function is performed by hardware in a manner of hardware driven by computer software depends on particular applications and design constraints of the technical solutions. A person skilled in the art may use different methods to implement the described functions for each particular application, but it should not be considered that the implementation goes beyond the scope of this application.

In embodiments of this application, functional modules of the devices may be divided based on the foregoing method examples. For example, each functional module may be divided corresponding to each function, or two or more functions may be integrated into one processing module. The integrated module may be implemented in a form of hardware, or may be implemented in a form of a software functional module. It should be noted that, in embodiments of this application, module division is an example and is merely logical function division. During an actual implementation, there may be another division manner.

When functional modules that are divided based on each corresponding function, FIG. 9 is a diagram of a structure a communication apparatus 90. The communication apparatus 90 may include a transceiver module 901 and a processing module 902. The processing module 902 may also be referred to as a processing unit, is configured to perform an operation other than sending and receiving operations, and for example, may be a processing circuit or a processor. The transceiver module 901 may also be referred to as a transceiver unit, is configured to perform the sending and receiving operations, and for example, may be an interface circuit, a transceiver machine, a transceiver, or a communication interface.

In some embodiments, the communication apparatus 90 may further include a storage module (not shown in FIG. 9), configured to store program instructions and data.

For example, the communication apparatus 90 is configured to implement a function of a terminal device. The communication apparatus 90 is, for example, the terminal device in the embodiment shown in FIG. 7.

The processing module 902 is configured to generate a first message, where the first message is for requesting an access network device to allocate, to the terminal device, a transmission resource for transmitting a to-be-transmitted packet, and the first message includes feature information of the to-be-transmitted packet;
the transceiver module 901 is configured to send the first message to the access network device;
the transceiver module 901 is further configured to receive a second message sent by the access network device, where the second message is for configuring the transmission resource; and
the transceiver module 901 is further configured to send the to-be-transmitted packet to the access network device based on the transmission resource.

In a possible implementation, the feature information of the to-be-transmitted packet includes at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

In a possible implementation, the change of the to-be-transmitted packet includes a change of the size and/or content of the to-be-transmitted packet at an interval of preset duration.

In a possible implementation, the statistical rule of the time at which the to-be-transmitted packet arrives at the terminal device includes at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

In a possible implementation, the QoS assurance level of the to-be-transmitted packet is determined based on the content of the to-be-transmitted packet.

In a possible implementation, when the to-be-transmitted packet includes a control instruction, the QoS assurance level of the to-be-transmitted packet is a first QoS assurance level; and when the to-be-transmitted packet includes duplicate content, the QoS assurance level of the to-be-transmitted packet is a second QoS assurance level, where the second QoS assurance level is lower than the first QoS assurance level.

In a possible implementation, the first message is carried in uplink control information UCI or a medium access control element MAC CE.

In a possible implementation, when the first message is carried in the MAC CE, a logical channel identifier LCID value corresponding to the MAC CE is a reserved value.

In a possible implementation, the reserved value is an integer greater than 36 and less than 43.

In a possible implementation, the first message is transmitted on a physical uplink control channel PUCCH or a physical uplink shared channel PUSCH.

In a possible implementation, when an information amount of the first message is less than a preset threshold, the first message is carried on a PUCCH in a first format; or when the information amount of the first message is greater than or equal to the preset threshold, the first message is carried on a PUCCH in a second format, where a quantity of time domain symbols supported by the PUCCH in the first format is less than or equal to 14, and a quantity of time domain symbols supported by the PUCCH in the second format is greater than 14.

In a possible implementation, the first format includes a format 3 or a format 4.

Alternatively, for example, the communication apparatus 90 is configured to implement a function of the access network device. The communication apparatus 90 is, for example, the access network device in the embodiment shown in FIG. 7.

The transceiver module 901 is configured to receive a first message sent by a terminal device, where the first message is for requesting the access network device to allocate, to the terminal device, a transmission resource for transmitting a to-be-transmitted packet, and the first message includes feature information of the to-be-transmitted packet;
the processing module 902 is configured to generate a second message, where the second message is for configuring the transmission resource;
the transceiver module 901 is further configured to send the second message to the terminal device; and
the transceiver module 901 is further configured to receive the to-be-transmitted packet sent by the terminal device based on the transmission resource.

In a possible implementation, the feature information of the to-be-transmitted packet includes at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

In a possible implementation, the change of the to-be-transmitted packet includes a change of the size and/or content of the to-be-transmitted packet at an interval of preset duration.

In a possible implementation, the statistical rule of the time at which the to-be-transmitted packet arrives at the terminal device includes at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

In a possible implementation, the QoS assurance level of the to-be-transmitted packet is determined based on the content of the to-be-transmitted packet.

In a possible implementation, when the to-be-transmitted packet includes a control instruction, the QoS assurance level of the to-be-transmitted packet is a first QoS assurance level; and when the to-be-transmitted packet includes duplicate content, the QoS assurance level of the to-be-transmitted packet is a second QoS assurance level, where the second QoS assurance level is lower than the first QoS assurance level.

In a possible implementation, the first message is carried in uplink control information UCI or a medium access control element MAC CE.

In a possible implementation, when the first message is carried in the MAC CE, a logical channel identifier LCID value corresponding to the MAC CE is a reserved value.

In a possible implementation, the reserved value is an integer greater than 36 and less than 43.

In a possible implementation, the first message is transmitted on a physical uplink control channel PUCCH or a physical uplink shared channel PUSCH.

In a possible implementation, when an information amount of the first message is less than a preset threshold, the first message is carried on a PUCCH in a first format; or when the information amount of the first message is greater than or equal to the preset threshold, the first message is carried on a PUCCH in a second format, where a quantity of time domain symbols supported by the PUCCH in the first format is less than or equal to 14, and a quantity of time domain symbols supported by the PUCCH in the second format is greater than 14.

In a possible implementation, the first format includes a format 3 or a format 4.

For example, the communication apparatus 90 may be a communication device, or may be a chip used in the communication device, or another combined device or component that has the function of the communication apparatus. When the communication apparatus 90 is the communication device, the transceiver module 901 may be a transceiver, where the transceiver may include an antenna, a radio frequency circuit, and the like; and the processing module 902 may be a processor (or a processing circuit), for example, a baseband processor, where the baseband processor may include one or more CPUs. When the communication apparatus 90 is the component that has the function of the communication apparatus, the transceiver module 901 may be a radio frequency unit; and the processing module 902 may be a processor (or a processing circuit), for example, a baseband processor. When the communication apparatus 90 is the chip system, the transceiver module 901 may be an input/output interface of a chip (for example, a baseband chip); and the processing module 902 may be a processor (or a processing circuit) of the chip system, and may include one or more central processing units. It should be understood that, the transceiver module 901 in this embodiment of this application may be implemented by a transceiver or a transceiver-related circuit component; and the processing module 902 may be implemented by a processor or a processor-related circuit component (or referred to as the processing circuit).

For example, the transceiver module 901 may be configured to perform all receiving and sending operations performed by the communication apparatus in the embodiment shown in FIG. 7, and/or configured to support another process of the technology described in this specification. The processing module 902 may be configured to perform all operations, other than the receiving and sending operations, performed by the communication apparatus in the embodiment shown in FIG. 7, and/or configured to support another process of the technology described in this specification.

In another possible implementation, the transceiver module 901 in FIG. 9 may be replaced with a transceiver, and a function of the transceiver module 901 may be integrated into the transceiver. The processing module 902 may be replaced with a processor, and a function of the processing module 902 may be integrated into the processor. Further, the communication apparatus 90 shown in FIG. 9 may further include a memory.

Alternatively, when the processing module 902 is replaced with the processor, and the transceiver module 901 is replaced with the transceiver, the communication apparatus 90 in the embodiment of this application may be a communication apparatus 100 shown in FIG. 10. The processor may be a logic circuit 1001, and the transceiver may be an interface circuit 1002. Further, the communication apparatus 100 shown in FIG. 10 may further include a memory 1003.

An embodiment of this application further provides a computer program product. When the computer program product is read and executed by a computer, functions of any one of the foregoing method embodiments may be implemented.

An embodiment of this application further provides a computer program. When the computer program is executed by a computer, functions of any one of the foregoing method embodiments may be implemented.

An embodiment of this application further provides a computer-readable storage medium. All or a part of the processes in method embodiments may be implemented by a computer program instructing relevant hardware. The program may be stored in the computer-readable storage medium. When the program runs, the processes in the method embodiments may be included. The computer-readable storage medium may be an internal storage unit of a terminal device (including a data transmit end and/or a data receive end) in any one of the foregoing embodiments, like a hard disk drive or a memory of a terminal. Alternatively, the computer-readable storage medium may be an external storage device of the terminal, for example, a plug-in hard disk drive, a smart media card (smart media card, SMC), a secure digital (secure digital, SD) card, a flash card (flash card), and the like that are configured on the terminal. Further, the computer-readable storage medium may further include both an internal storage unit and an external storage device of the foregoing terminal. The computer-readable storage medium is configured to store the computer program and other programs and data required by the foregoing terminal. The computer-readable storage medium may be further configured to temporarily store data that has been output or is to be output.

It should be noted that, the terms "first", "second", and the like in the specification, claims, and accompanying drawings of this application are intended to distinguish between different objects, but are not intended to describe a specific order. "First" and "second" mentioned below are merely intended for a purpose of description, and shall not be understood as an indication or implication of relative importance or implicit indication of the quantity of indicated technical features. Therefore, a feature limited by "first" or "second" may explicitly or implicitly include one or more features. In the description of embodiments, unless otherwise specified, "a plurality of" means two or more.

In addition, the terms "include" and "have" and any other variants thereof are intended to cover a non-exclusive inclusion. For example, a process, a method, a system, a product, or a device that includes a series of steps or units is not limited to the steps or units that are listed, but optionally further includes the steps or units that are not listed, or optionally further includes other inherent steps or units of the process, the method, the product, or the device.

It should be understood that, in this application, "at least one (item)" means one or more. "A plurality of" means two or more. "At least two (items)" means two, three, or more than three. "And/or" describes an association relationship between associated objects, and indicates that three relationships may exist. For example, "A and/or B" may indicate the following three cases: Only A exists, both A and B exist, and only B exists. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, or c, or at least one item (piece) of a, b, and c may indicate: a, b, c, "a and b", "a and c", "b and c", or "a, b, and c", where a, b, and c may be singular, or may be plural. Both "when" and "if" mean that corresponding processing is performed in an objective case, but are not intended to limit time. In addition, the terms do not necessarily mean that a determining action is performed during implementation, and do not mean another limitation either.

In embodiments of this application, the term like "example" or "for example" is for representing giving an example, an illustration, or descriptions. Any embodiment or design solution described as an "example" or "for example" in embodiments of this application should not be explained as being more preferred or having more advantages than another embodiment or design solution. Exactly, use of the words such as "example" or "for example" is intended to present a relative concept in a specific manner for ease of understanding.

Based on the foregoing descriptions of implementations, a person skilled in the art may clearly understand that, for the purpose of convenient and brief description, division of the foregoing functional modules is used as an example for illustration. In actual application, the foregoing functions can be allocated to different functional modules and implemented based on a requirement, that is, an internal structure of an apparatus is divided into different functional modules to implement all or some of the functions described above.

In the several embodiments provided in this application, it may be understood that, the disclosed apparatus and method may be implemented in other manners. For example, the foregoing apparatus embodiments are merely examples. For example, division into the modules or the units is merely logical function division. In an actual implementation, another division manner may be used. For example, a plurality of units or components may be combined or integrated into another apparatus, or some features may be ignored or not performed. In addition, the displayed or discussed mutual couplings, direct couplings, or communication connections may be implemented by using some interfaces. The indirect couplings or communication connections between the apparatuses or units may be implemented in electronic, mechanical, or other forms.

The units described as separate parts may be or may not be physically separate, and components displayed as the units may be one or more physical units, may be located in one place, or may be distributed on different places. A part or all of the units may be selected based on an actual requirement to achieve the objectives of the solutions in embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such understanding, the technical solutions in embodiments of this application essentially or all or some of the technical solutions may be implemented in the form of a software product. The software product is stored in a storage medium and includes several instructions for instructing a device (which may be a single-chip microcomputer, a chip or the like) or a processor (processor) to perform all or some of the steps of the methods described in embodiments of this application. The foregoing storage medium includes any medium that may store program code, such as a USB flash drive, a removable hard disk drive, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope in this application shall fall within the protection scope of this application. Therefore, the protection scope of this application shall be subject to the protection scope of the claims.

## Claims

1. A data transmission method, applied to a terminal device, wherein the method comprises:
sending a first message to an access network device, wherein the first message is for requesting the access network device to allocate, to the terminal device, a transmission resource for transmitting a to-be-transmitted packet, and the first message comprises feature information of the to-be-transmitted packet;
receiving a second message sent by the access network device, wherein the second message is for configuring the transmission resource; and
sending the to-be-transmitted packet to the access network device based on the transmission resource.

2. The method according to claim 1, wherein the feature information of the to-be-transmitted packet comprises at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

3. The method according to claim 2, wherein the change of the to-be-transmitted packet comprises a change of the size and/or content of the to-be-transmitted packet at an interval of preset duration.

4. The method according to claim 2, wherein the statistical rule of the time at which the to-be-transmitted packet arrives at the terminal device comprises at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

5. The method according to claim 2, wherein the QoS assurance level of the to-be-transmitted packet is determined based on content of the to-be-transmitted packet.

6. The method according to claim 5, wherein when the to-be-transmitted packet comprises a control instruction, the QoS assurance level of the to-be-transmitted packet is a first QoS assurance level; and
when the to-be-transmitted packet comprises duplicate content, the QoS assurance level of the to-be-transmitted packet is a second QoS assurance level, wherein the second QoS assurance level is lower than the first QoS assurance level.

7. The method according to claim 1, wherein the first message is carried in uplink control information UCI or a medium access control element MAC CE.

8. The method according to claim 7, wherein when the first message is carried in the MAC CE, a logical channel identifier LCID value corresponding to the MAC CE is a reserved value.

9. The method according to claim 8, wherein the reserved value is an integer greater than 36 and less than 43.

10. The method according to any one of claims 1 to 9, wherein the first message is transmitted on a physical uplink control channel PUCCH or a physical uplink shared channel PUSCH.

11. The method according to claim 10, wherein when an information amount of the first message is less than a preset threshold, the first message is carried on a PUCCH in a first format; or when the information amount of the first message is greater than or equal to the preset threshold, the first message is carried on a PUCCH in a second format, wherein a quantity of time domain symbols supported by the PUCCH in the first format is less than or equal to 14, and a quantity of time domain symbols supported by the PUCCH in the second format is greater than 14.

12. The method according to claim 11, wherein the first format comprises a format 3 or a format 4.

13. A data transmission method, applied to an access network device, wherein the method comprises:
receiving a first message sent by a terminal device, wherein the first message is for requesting the access network device to allocate, to the terminal device, a transmission resource for transmitting a to-be-transmitted packet, and the first message comprises feature information of the to-be-transmitted packet;
sending a second message to the terminal device, wherein the second message is for configuring the transmission resource; and
receiving the to-be-transmitted packet sent by the terminal device based on the transmission resource.

14. The method according to claim 13, wherein the feature information of the to-be-transmitted packet comprises at least one of the following: a size of the to-be-transmitted packet, a change of the to-be-transmitted packet, a statistical rule of time at which the to-be-transmitted packet arrives at the terminal device, a quality of service QoS assurance level of the to-be-transmitted packet, processing time of the to-be-transmitted packet, and buffer time of the to-be-transmitted packet.

15. The method according to claim 14, wherein the change of the to-be-transmitted packet comprises a change of the size and/or content of the to-be-transmitted packet at an interval of preset duration.

16. The method according to claim 14, wherein the statistical rule of the time at which the to-be-transmitted packet arrives at the terminal device comprises at least one of the following: an average time interval between time at which two consecutive to-be-transmitted packets arrive at the terminal device, a maximum time interval between time at which two consecutive to-be-transmitted packets arrive at the terminal device, a minimum time interval between time at which two consecutive to-be-transmitted packets arrive at the terminal device, or a median of time intervals between time at which two consecutive to-be-transmitted packets arrive at the terminal device.

17. The method according to claim 14, wherein the QoS assurance level of the to-be-transmitted packet is determined based on content of the to-be-transmitted packet.

18. The method according to claim 17, wherein when the to-be-transmitted packet comprises a control instruction, the QoS assurance level of the to-be-transmitted packet is a first QoS assurance level; and
when the to-be-transmitted packet comprises duplicate content, the QoS assurance level of the to-be-transmitted packet is a second QoS assurance level, wherein the second QoS assurance level is lower than the first QoS assurance level.

19. The method according to claim 13, wherein the first message is carried in uplink control information UCI or a medium access control element MAC CE.

20. The method according to claim 19, wherein when the first message is carried in the MAC CE, a logical channel identifier LCID value corresponding to the MAC CE is a reserved value.

21. The method according to claim 20, wherein the reserved value is an integer greater than 36 and less than 43.

22. The method according to any one of claims 13 to 21, wherein the first message is transmitted on a physical uplink control channel PUCCH or a physical uplink shared channel PUSCH.

23. The method according to claim 22, wherein when an information amount of the first message is less than a preset threshold, the first message is carried on a PUCCH in a first format; or when the information amount of the first message is greater than or equal to the preset threshold, the first message is carried on a PUCCH in a second format, wherein a quantity of time domain symbols supported by the PUCCH in the first format is less than or equal to 14, and a quantity of time domain symbols supported by the PUCCH in the second format is greater than 14.

24. The method according to claim 23, wherein the first format comprises a format 3 or a format 4.

25. A communication apparatus, comprising a memory and a processor, wherein the memory is coupled to the processor, the memory is configured to store instructions executable by the processor, and when executing the instructions, the processor performs the method according to any one of claims 1 to 24.

26. A computer-readable storage medium, wherein the computer-readable storage medium stores computer instructions, and when the computer instructions are run on a communication apparatus, the communication apparatus is caused to perform the method according to any one of claims 1 to 24.

27. A computer program product, comprising a computer program, wherein when the computer program is executed, the method according to any one of claims 1 to 24 is implemented.

28. A communication system, comprising at least two access network devices, wherein the access network device is configured to perform the method according to any one of claims 13 to 24.
